Europäisches Patentamt

(19) European Patent Office   (11) Publication number: **0 236 590**
Office européen des brevets                                **B1**

(12)                    **EUROPEAN PATENT SPECIFICATION**

(45) Date of publication of the patent specification:    (51) Int. Cl.⁴: **C01B 33/28,** B01J 29/28,
27.12.89                                                **C10G 45/64**

(21) Application number: **86201982.5**

(22) Date of filing: **12.11.86**

(54) Process for the preparation of ferrierite and its use as dewaxing catalyst (carrier).

(30) Priority: **09.12.85 US 806307**
      **05.08.86 US 893430**

(43) Date of publication of application:
**16.09.87 Bulletin 87/38**

(45) Publication of the grant of the patent:
**27.12.89 Bulletin 89/52**

(84) Designated Contracting States:
**AT BE CH DE ES FR GB IT LI LU NL SE**

(73) Proprietor: **SHELL INTERNATIONALE RESEARCH MAATSCHAPPIJ B.V., Carel van Bylandtlaan 30, NL-2596 HR Den Haag(NL)**

(72) Inventor: **Evans, Wayne Errol, 8018 Addicks-Clodine, Houston Texas 77083(US)**

(74) Representative: **Aalbers, Onno et al, P.O. Box 302, NL-2501 CH The Hague(NL)**

(56) References cited:
**EP-A- 0 012 473
FR-A- 2 264 777
US-A- 4 343 692**

**JOURNAL OF APPLIED CHEMISTRY OF THE USSR, vol. 54, no. 5, part 1, May 1981, pages 842-844, Plenum Publishing Corp., New York, US; L.N. MALASHEVICH et al.: "Synthesis and the physicochemical and adsorption properties of the high-silica zeolite ferrierite" 000**

## Description

The invention relates to a process for the preparation of ferrierite and to a process for the catalytic dewaxing of hydrocarbon oils wherein the catalyst employed is based on ferrierite thus prepared. The invention is specifically directed to a method for preparing sodium ferrierite in a time efficient manner so that maximum activity of hydrogen ferrierite derived from sodium ferrierite can be obtained after a relatively short time of crystallization. The resultant hydrogen ferrierite catalyst (carrier) is preferably utilized in dewaxing of high viscosity index (HVI) oils derived from crude oils indigenously having a relatively high wax content. The catalyst (carrier) is more specifically used in lowering of pour points in lubricating oils having a viscosity of between 80 and 150 (SSU).

It is known that when relatively light lubricating oils, such as a HVI 100 or 150, are to be catalytically dewaxed a higher viscosity index is retained if the oil is dewaxed in the presence of a ferrierite-based catalyst. One process for the catalytic hydrodewaxing of a petroleum feedstock, such as distillates and residual fractions, occurs in the presence of a catalyst comprising a synthetic ferrierite zeolite with at least one metal from the group consisting of Group 6b, 7b and 8b metals incorporated therewith. Reference is made to the Groups of the Periodic Table of the Elements as stated in the "Handbook of Chemistry and Physics", 55th edition, CRC Press, Ohio, USA (1975). In 1982, U.S. Patent 4,343,692 was issued to Winquist for such a process having unrecognized advantageous viscosity index retention. The instant invention is in particular concerned with a time efficient method of manufacture of a ferrierite catalyst precursor whose dewaxing abilities (after conversion to the hydrogen species) were adroitly promulgated by Winquist, in U.S. patent 4,343,692.

One method of preparing a catalyst used in the last mentioned patent is a process for preparing ferrierite as described in Nanne et al (U.S. Patent 4 251 499). The molar compositions of the starting material in Nanne et al are exemplified by 13 different examples, nine of which resulted in the production of relatively pure ferrierite. The starting components of alumina and sodium oxide to silica vary to an extent both smaller and larger than the narrow range of this invention. Regardless of the mole ratios taught in Nanne et al, a reaction time of at least 113 hours is described for the preparation of a catalyst with sufficient catalytic activity to result in high VI lubricating oils via dewaxing of a wax-containing lubricating oil. The invention is an improvement upon the method of manufacture of the ferrierite catalyst of Nanne et al and a step forward in the art of catalyst preparation techniques. Methods for preparing ferrierite also requiring such long reaction times are also described in FR 2 264 777 A and in "Synthesis and the physicochemical properties of high silica zeolite ferrierite" by L.N. Malashevich et al, J. Appl. Chem., USSR, Vol. 54, No. 5, pages 842–844.

In Cormier et al, U.S. Patent 4 017 590, a synthetic ferrierite is prepared within 2–96 hours at 230–310°C without the use of a nitrogen template precursor. The mole ratios of aluminium and total alkali are much larger than contemplated in the instant invention plus a carbonate-bicarbonate buffer is maintained during crystallization. The alkali metal ferrierite catalyst precursor of this invention is prepared, i.e. crystallized, without the presence of carbon dioxide. Also, employment of large quantities of aluminium as in Cormier et al would result in incomplete crystallization of alkali metal ferrierite.

It is an object of this invention to provide a method of manufacture for ferrierite catalyst precursor in the shortest crystallization time to inure maximal catalytic activity to a hydrogen ferrierite derived therefrom. Specific mole ratios of certain components are critical in order to attain an unexpected rapid crystallization time of alkali metal ferrierite. Said ferrierite catalyst precursor can be subsequently converted into a synthetic hydrogen ferrierite, which can be used as a catalyst (carrier) in catalytic dewaxing and other hydrocarbon conversion processes such as cracking, isomerization, dealkylation and hydrocracking.

The invention therefore relates to a process for the preparation of ferrierite which comprises maintaining an aqueous starting mixture containing at least one silicon compound, at least one aluminium compound, at least one alkali metal (M) compound and at least one organic nitrogen compound (RN) selected from the group consisting of piperidine, pyridine, alkyl-substituted piperidines and -pyridines, piperazine, 4-picoline and 4-picoline-N-oxide, at an elevated temperature until crystalline ferrierite has formed, in which starting mixture the various compounds are present in the following molar ratios, the aluminium-, silicon- and alkali metal compounds being calculated on basis of the oxides:

$SiO_2 : M_2O = 7.3$ to $15.6$,
$SiO_2 : Al_2O_3 = 15.6$ to $35.7$,
$H_2O : SiO_2 = 5$ to $500$, and
$RN : SiO_2 = 0.05$ to $1.0$

Preferably, a sodium compound is employed as alkali metal compound in the aqueous starting mixture. The mole ratios of both the sodium compound and aluminium compound in relation to the silicon compound, calculated on the basis of the oxide form of said sodium compound, aluminium compound and silicon compound, are equivalent to the presence of 1.60 to 3.40 moles of sodium oxide per 25 moles of said silicon oxide and 0.7 to 1.60 moles of said aluminium oxide per 25 moles of said silicon oxide, water is present in a molar ratio of 5–500 moles of water per mole of said silicon oxide, said nitrogen compound is present in a molar ratio of 0.05 to 1.0 moles of said nitrogen compound per mole of said silicon oxide and the mole ratio of sodium oxide to aluminium oxide is greater than 1.

It is critical to this invention, in order to attain quick formation via crystallization of the ferrierite that an aluminium compound or compounds be added to the starting mixture, calculated in the oxide form, in a specific mole ratio of 0.70 to 1.6 moles of luminium or aluminium compounds per 25 moles silicon compound or compounds, expressed as silicon oxide.

Preferably, the molar ratio in the aqueous starting mixture of $SiO_2/Al_2O_3/M_2O$ is equal to 25 $SiO_2/(0.9$ to $1.1)$ $Al_2O_3/(2.3$ to $2.7)M_2O$.

This invention is an improvement over the ferrierite method of preparation disclosed in U.S. Patent 4 251 499 and 4 017 590. Essentially, this method of ferrierite preparation reduces the time necessary to attain a viable catalyst precursor when the particular mole ratio of components in the aqueous mixture are established and maintained.

The formation of a synthetic alkali metal ferrierite may be viable with any alkali metal oxide e.g. lithium oxide or potassium oxide, but the best results are attained with sodium oxide to arrive at sodium ferrierite. In order to convert the alkali metal ferrierite product prepared by the process according to the invention into a catalytically active form, the alkali metal ions present in said product are preferably replaced by hydrogen ions by means of an ion exchange treatment e.g. using a solution of an ammonium compound or an acid. The presence and composition of the organic nitrogen compound is very important to the formation of the resultant sodium ferrierite catalyst precursor. It is most preferred that the nitrogen compound be piperidine or an alkyl piperidine. Examples of the alkyl piperidine are those in which the alkyl substituent is bonded to a carbon atom of the piperidine molecule such as 2-methyl, 3-methyl, 4-methyl, 2-ethyl, 3-ethyl and 2-propyl piperidine. Also, piperidines are viable in which the alkyl substituent is bonded to the nitrogen atom of the piperidine molecule such as 1-methyl, 1-ethyl, 1-propyl, 1-butyl, 1-pentyl, 1-octyl, 1-dodecyl, piperidine. Other nitrogen-containing compounds may also be utilized such as piperazine, (alkyl) pyridine, 4-picoline-N-oxide, and 4-picoline, with the piperidine and alkyl piperidines being the most preferred nitrogen-containing compounds. Also contemplated as a viable nitrogen containing compound are derivatized pyridines and piperidines.

The quantities of the alkali metal, aluminium and silicon are calculated on the basis of their oxide forms, but need not be added to the gel as such. For example, aluminium may be added in the form of a salt, i.e. aluminium sulphate; alkali metal may be added in the hydroxide form; while silicon may be added in the form of a salt, i.e. sodium silicate or in the oxide form, i.e. silica gel.

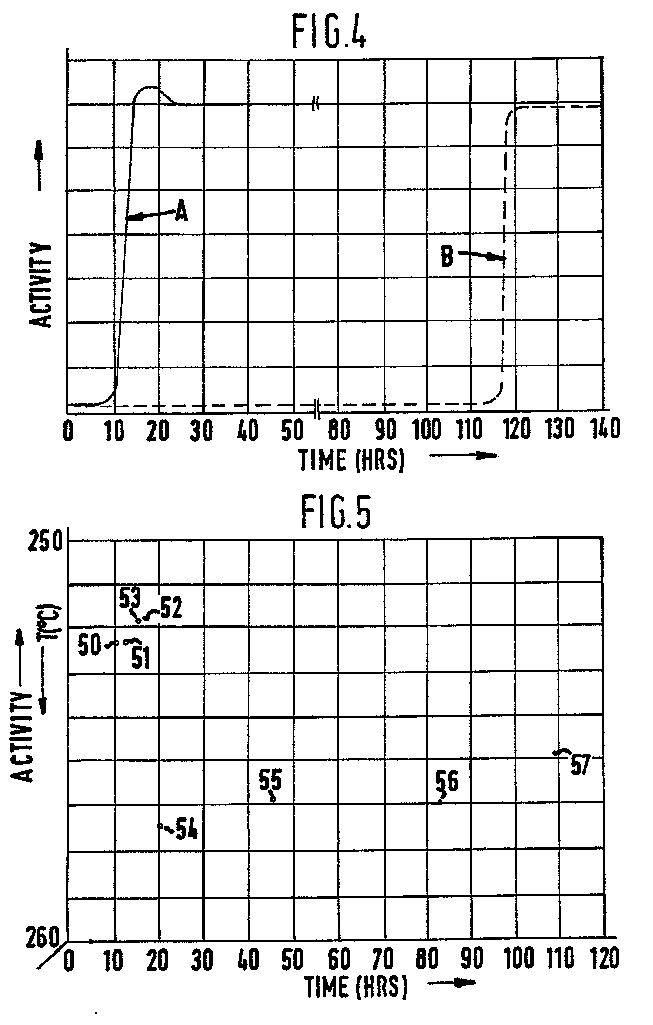

The aqueous mixture is suitably hydrothermally maintained at a temperature of between 100 and 400°C, preferably between 150-250 °C, and a pressure from 1 to 100 bar abs., preferably under autogenous pressure, whereby a solid product comprising an alkali metal ferrierite is attained from the aqueous mixture via crystallization, and separation from the mother liquor which product is then suitably calcined, preferably in air at a temperature from 500 °C to 700 °C for 2 to 5 hours to remove occluded amine. Previously, it was believed that in order to attain substantially complete crystallization it was necessary to crystallize former gel admixtures containing the prescribed nitrogen compound for a period of time of well over 100 hours. However, applicant has now found that as long as the molar ratios of alkali metal oxide to silicon oxide and aluminium oxide to silicon oxide are maintained within the target range, this crystallization time can be surprisingly reduced as much as seven fold. This shortened time of crystallization is in most cases more than 10 hours, and preferably more than 11 hours, as crystallization will usually not be completed before passage of that time period in any event and any aluminosilicate recovered before that period of crystallization will generally be amorphous or partially amorphous aluminosilicate. The minimum crystallization time is in the range of 10 hours or 11 hours but an exact minimum duration of crystallization time is simply not ascertainable. It must also be realized that immediately after crystallization begins, the sodium ferrierite rapidly proceeds to ultimate crystallization over a very short period of time. As shown in Figure 4 of the instant drawings, crystallization of the catalyst precursor over an additional time will not result in a substantial increase in catalytic activity for the derived hydrogen ferrierite. Surprisingly, it has also been found that catalytic activity of the hydrogen ferrierite is actually diminished somewhat when crystallization time is extended past 20 hours, although the reasons for this unexpected loss in catalytic activity from overextended hydrothermal crystallization are not well understood. It is possible, however, that some alteration of microcrystal size is responsible for the demise in catalytic activity. This invention contemplates and covers all time periods of crystallization induced by hydrothermal treatment including a time period wherein crystallization no longer is advantageously continued by hydrothermal treatment.

In order to further improve the catalytic activity of the ferrierite prepared according to the present process, at least one metal selected from the group consisting of the metals from Groups 6b, 7b and 8 of the Periodic Table of the Elements is preferably incorporated into the ferrierite product (which is most preferably in the hydrogen form before incorporation of said metal(s) by means of any method known in the art, such as (dry) impregnation, precipitation or ion-exchange).

The invention also relates to ferrierite which has been prepared according to a process as described hereinbefore.

Moreover, the invention relates to hydrocarbon oils which have been dewaxed by employing a catalytic dewaxing process in which a catalyst is used which is based on ferrierite prepared as described hereinbefore.

The catalytic dewaxing process according to the invention is suitably carried out at a temperature from 150 to 500 °C, a hydrogen pressure from 5 to 200 bar, a space velocity from 0.1 to 10 kg.l$^{-1}$.h$^{-1}$ and a hydrogen/oil ratio from 100 to 2500 l(S.T.P.).kg$^{-1}$. The process is preferably carried out at a temperature from 230 to 450 °C, a hydrogen pressure from 10 to 100 bar, a space velocity from 0.3 to 3 kg.l$^{-1}$.h$^{-1}$ and a hydrogen/oil ratio from 200-2000 l(S.T.P.).kg$^{-1}$. The expression "S.T.P." indicates "Standard Temperature and Pressure" of 0°C and 1 bar abs.

This invention is further described in regard to the following examples which demonstrate the criticality of the ratios alkali metal oxide to silicon oxide and aluminium oxide to silicon oxide. The instant drawings graphically illustrate a summary of the results derivative of following this method of manufacture. The below described examples and drawings are not to be construed as a limitation upon the broad aspects of this invention, but however are exemplary to highlight how to use and how to make a ferrierite catalyst precursor or resultant hydrogen ferrierite via ion exchange by the instant method of manufacture.

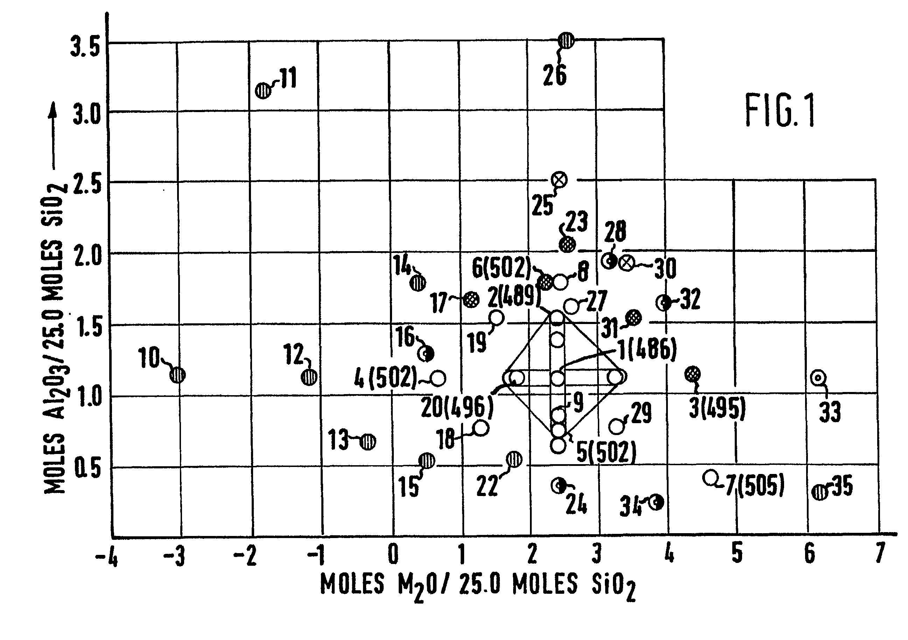

Figure 1 is a graphic display of about 35 aluminosilicate compositions showing the critical target area for the moles of aluminium oxide and alkali metal oxide per 25 moles of silicon dioxide.

The various symbols used in Figure 1 represent the following:

O      Ferrierite which is substantially uncontaminated by other zeolitic species

⨳      Ferrierite with contamination

⊗      Ferrierite/Magadiite

⊙      Mordenite

◑      Ferrierite/Mordenite

⪑      predominantly amorphous

Figure 2 is a graphic display of the activity (defined as the reactor temperature T(°C) required to achieve an oil pour point of -6.6 °C) of the resultant hydrogen ferrierite catalyst derived from a prepared sodium ferrierite based on the level of sodium oxide per 25 moles of silicon oxide for a constant level of aluminium oxide.

Figure 3 is a graphic display of the activity (defined as for Fig. 2) of a hydrogen ferrierite derived from a prepared sodium ferrierite catalyst with the particular mole ratio of aluminium oxide to 25 moles of silicon oxide for a constant level of sodium oxide.

Figure 4 demonstrates that the time of continued hydrothermal treatment is not essential to the formation of the sodium ferrierite once the sodium ferrierite has attained a crystallized form.

Figure 5 demonstrates the relative activity (defined as for Fig. 2 with inverse temperature scale) of a hydrogen ferrierite catalyst derived from crystallized sodium ferrierite after the latter undergoes 10 to 20 hours of hydrothermal treatment versus other ferrierites derived from 20+ to 110 hours (HRS) of hydrothermal treatment time.

## EXAMPLE 1

In these experiments, a synthesis recipe was used with the molar ratios of SiO$_2$/Al$_2$O$_3$/Na$_2$O/H$_2$O/piperidine being equal to 25.0/xx/yy/518/9.8 wherein the quantity of aluminium oxide equals xx and the quantity of sodium oxide equals yy. All of the recipes were added to an autoclave equipped with stirring means and heated at a temperature between 155 and 160 °C for a total of 16 hours. After cooling, the contents of the autoclave were filtered, washed with water, dried at 125 °C overnight, and calcined in air to remove occluded amine. The synthetic sodium ferrierites were converted to the hydrogen form by exchange with ammonium nitrate followed by calcination and ion exchanged with palladium tetramine dinitrate and were then tested for catalytic activity to dewax a hydrotreated phenol extracted Arabian light oil 100 (ABL) with a pour point and chemical constituencies as set forth in Table 1.

Table 1

| | |
|---|---|
| Pour point | 24°C |
| Density | 848.6 kg/m$^3$ |
| Elemental analysis | C 86.19 %w |
| | H 13.79 %w |
| | N 11 parts per million (ppm) |
| | S 980 ppm |

The dewaxing conditions were 85 bar pressure with a hydrogen to oil ratio of 900 l(S.T.P.).kg$^{-1}$ at a liquid hourly space velocity of 1.0 kg.l$^{-1}$.h$^{-1}$. Table 2 lists the relative molar contents of the aluminium oxide and sodium oxide per 25 moles of silicon dioxide used in the crystallization of sodium ferrierite catalyst precursor, from which the hydrogen species of ferrierite were prepared. The respective quantities of sodium oxide and aluminium oxide in Table 2 are shown as "Yes" when within the target range or "No" when extrinsic to the target range. The target area is only achieved by the nomenclature of both sodium oxide and aluminium oxide being indicated as "Yes", i.e. Experiments Nos. 1, 2, 5, 6, 9, 10, 20, 21, 23 and 29. Where necessary to determine criticality, activity tests were conducted by dewaxing the ABL feed. The highest activity of catalysts are indicated by the lowest reactor temperatures. While a crystallinity of near 100% is desirable, it is feasible to operate a dewaxing catalyst with less than 100% crystallinity as long as the activity is sufficient to attain target pour points.

Table 2

| Experiment No. | Moles of SiO$_2$ | Moles of Al$_2$O$_3$ | | Moles of Na$_2$O | | Reactor temperature (°C)[1] | Crystallinity (%) | Crystalline product |
|---|---|---|---|---|---|---|---|---|
| 1) | 25.0 | 1.07 | (Yes) | 2.48 | (Yes) | 252 | – | Ferrierite |
| 2) | 25.0 | 1.35 | (Yes) | 2.48 | (Yes) | 254 | 93 | Ferrierite |
| 3) | 25.0 | 1.07 | (Yes) | 4.32 | (No) | 257 | – | Ferrierite and Mordenite |
| 4) | 25.0 | 0.62 | (No) | 1.07 | (No) | 261 | – | Ferrierite |
| 5) | 25.0 | 0.65 | (Yes) | 2.46 | (Yes) | 261 | 72 | Ferrierite |
| 6) | 25.0 | 1.75 | (Yes) | 2.48 | (Yes) | 261 | 85 | Ferrierite |
| 7) | 25.0 | 0.35 | (No) | 4.62 | (No) | 263 | 100 | Ferrierite |
| 8) | 25.0 | 2.00 | (No) | 2.51 | (Yes) | Not tested | 71 | Contaminated with Mordenite |
| 9) | 25.0 | 0.85 | (Yes) | 2.46 | (Yes) | Not tested | 99 | Ferrierite |
| 10) | 25.0 | 1.07 | (Yes) | –3.08 | (Yes) | Not tested | – | Amorphous |
| 11) | 25.0 | 2.50 | (No) | –1.83 | (Yes) | Not tested | – | Amorphous |
| 12) | 25.0 | 1.10 | (Yes) | –1.20 | (No) | Not tested | – | Amorphous |
| 13) | 25.0 | 0.67 | (Yes) | –0.33 | (No) | Not tested | – | Amorphous |
| 14) | 25.0 | 1.75 | (Yes) | 0.42 | (No) | Not tested | – | Amorphous |
| 15) | 25.0 | 0.50 | (No) | 0.50 | (No) | Not tested | – | Amorphous |
| 16) | 25.0 | 1.25 | (Yes) | 0.50 | (No) | Not tested | – | Ferrierite/Mordenite |
| 17) | 25.0 | 1.67 | (Yes) | 1.17 | (No) | Not tested | – | Ferrierite Contamination |
| 18) | 25.0 | 0.75 | (Yes) | 1.25 | (No) | Not tested | – | Ferrierite |
| 19) | 25.0 | 1.50 | (Yes) | 1.50 | (No) | Not tested | – | Ferrierite |
| 20) | 25.0 | 1.07 | (Yes) | 1.75 | (Yes) | 257 | – | Ferrierite |
| 21) | 25.0 | 1.07 | (Yes) | 3.25 | (Yes) | 256 | – | Ferrierite |
| 22) | 25.0 | 0.50 | (No) | 1.75 | (Yes) | Not tested | – | Amorphous |
| 23) | 25.0 | 1.75 | (Yes) | 2.25 | (Yes) | Not tested | – | Ferrierite with contaminants |
| 24) | 25.0 | 0.35 | (No) | 2.45 | (Yes) | Not tested | – | Ferrierite with Mordenite |
| 25) | 25.0 | 2.50 | (No) | 2.49 | (Yes) | Not tested | – | Ferrierite/Magadiite |
| 26) | 25.0 | 3.50 | (No) | 2.54 | (Yes) | Not tested | – | Amorphous |
| 27) | 25.0 | 1.63 | (No) | 2.63 | (Yes) | Not tested | – | Ferrierite |
| 28) | 25.0 | 2.25 | (No) | 3.16 | (Yes) | Not tested | – | Ferrierite with Mordenite |
| 29) | 25.0 | 0.75 | (Yes) | 3.25 | (Yes) | – | – | Ferrierite |
| 30) | 25.0 | 2.00 | (No) | 3.49 | (No) | – | – | Ferrierite/Magadiite |
| 31) | 25.0 | 1.50 | (Yes) | 3.50 | (No) | – | – | Ferrierite with contaminants |
| 32) | 25.0 | 1.67 | (No) | 3.92 | (No) | – | – | Ferrierite with Mordenite |
| 33) | 25.0 | 1.07 | (Yes) | 6.17 | (No) | – | – | Mordenite |
| 34) | 25.0 | 0.25 | (No) | 3.92 | (No) | – | – | Ferrierite with Mordenite |
| 35) | 25.0 | 0.25 | (No) | 6.20 | (No) | – | – | Amorphous |

[1] Temperature required to achieve a dewaxed oil with a pour point of –6.6°C at the stated process conditions

6

Note must be taken that the catalyst in which mordenite was present in addition to ferrierite exhibited an initial activity comparable to that of pure hydrogen ferrierite but the viscosity index of the dewaxed oil was lower than that of dewaxed oil derived from pure hydrogen ferrierite catalyst. The reaction temperatures are shown juxtaposed to the applicable tests in Figure 1. Some of the crystalline aluminosilicates were not tested due to time constraints. No reasonable purpose would be achieved by testing the amorphous compositions.

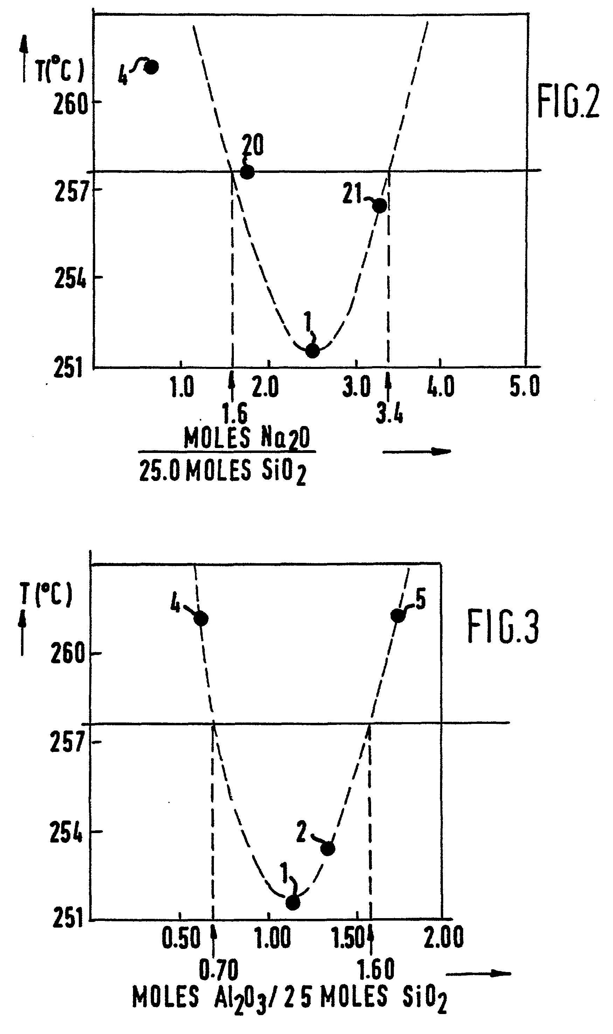

The activity tests of aluminosilicates derived from starting mixtures with compositions, both inside and outside the target range of the mole ratios of aluminium oxide and sodium oxide, to silicon oxide are shown in Figure 1. Figure 2 shows respective catalytic activities of a hydrogen ferrierite derived by ion exchange of a sodium ferrierite crystallized at a constant ratio of $SiO_2/Al_2O_3$ (25.0:1.07) in the starting mixture.

Figure 3 shows the respective catalytic activities of catalysts derived from sodium ferrierite prepared from a recipe wherein sodium oxide level in the aqueous starting mixture is constant i.e. $SiO_2/Na_2O = 25.0/2.48$. It can clearly be seen that catalyst activity is highly dependent upon both the sodium oxide level and the aluminium oxide level, relative respectively to the silicon oxide level.

Both of these molar ratios must be within a specific range to achieve the observed great reduction in reactor temperature to attain a -6.6 °C pour point lubricating oil. Figure 4 demonstrates the result of the continued hydrothermal treatment of an aluminosilicate once crystallization has started. Line A represents a hydrogen ferrierite catalyst prepared according to the present process, whereas line B represents a catalyst prepared according to U.S. Patent 4,251,499. Extended hydrothermal treatment may actually hinder the resultant activity of the derived catalyst once the very rapid rate of crystallization is complete. Figure 4 also demonstrates that if the aluminium oxide and sodium oxide are maintained within the proper mole ratios, the time of crystallization of the catalyst precursor is reduced to about 12 hours versus the prior art method of U.S. Patent 4,251,499 which necessitated nearly 113 hours before sodium ferrierite was crystallized. This latter figure also demonstrates the rapid formation of the sodium ferrierite once crystallization begins.

## EXAMPLE 2

In this example sodium ferrierite catalyst precursors were derived using the centre of the target area with respect to sodium and aluminium content. The recipe correlates to Test 1 wherein the initial mixture comprised, before crystallization:

$SiO_2/Al_2O_3$ 25.0:1.07
$SiO_2/Na_2O$ 25.0:2.48
$SiO_2/H_2O/piperidine$ 25.0/518/9.8 Time of crystallization was varied for experiments 36-49 and the sodium ferrierite (where crystallized) analyzed for its X-ray diffraction pattern. The results are set forth in Table 3.

Table 3

| Experiment No. | Time (in hours) of crystallization at conditions of example 1 | Products determined by X-ray pattern |
|---|---|---|
| 36 | 3 | Amorphous |
| 37 | 11 | Pure Na Ferrierite |
| 38 | 13 | Pure Na Ferrierite |
| 39 | 15 | Pure Na Ferrierite |
| 40 | 20 | Pure Na Ferrierite |
| 41 | 21 | Pure Na Ferrierite |
| 42 | 34 | Pure Na Ferrierite |
| 43 | 45 | Pure Na Ferrierite |
| 44 | 51 | Pure Na Ferrierite |
| 45 | 65 | Pure Na Ferrierite |
| 46 | 65 | Pure Na Ferrierite |
| 47 | 83 | Pure Na Ferrierite |
| 48 | 91 | Pure Na Ferrierite |
| 49 | 104 | Pure Na Ferrierite |

The time of crystallization is a critical parameter in making pure sodium ferrierite, although once the time period of 10 to 20 hours is attained (again within the target mole ratios of aluminium and sodium) then continued crystallization is not productive, i.e. hydrothermal treatment can go on indefinitely without impairing the quality of the sodium ferrierite as determined by X-ray diffraction. These data confirm the crystallization times exemplified in Figure 4, supra. It should also be noted that the sodium ferrierite derived at 13 hours was very high quality and the derived hydrogen ferrierite therefrom was found to be extremely active as shown by Figure 1, Test 1.

## EXAMPLE 3

This example was promulgated to ascertain the effects of continued hydrothermal treatment on hydrogen ferrierite catalyst activity past the time at which crystallization of sodium ferrierite is complete. The recipe of Example 2 (experiment 1) was followed which again was in the optimal target area. The hydrogen ferrierite catalyst derived from the sodium ferrierite was tested for dewaxing performance with the ABL 100 oil described in Table 1 above at the same test conditions as established for catalysts of Tests 1-7, 20 and 21. Table 4 exemplifies those results.

Table 4

| Test No. | Time of crystallization conditions of example 1 | Reactor temperature (°C) required to reach target pour point of −6.6 °C |
|---|---|---|
| 50 | 11 | 253 |
| 51 | 13 | 253 |
| 52 | 15 | 252 |
| 53 | 15 | 252 |
| 54 | 20 | 257 |
| 55 | 45 | 256 |
| 56 | 83 | 256 |
| 57 | 108 | 255 |

Figure 5 exemplifies the activity bunching-pattern of tests 50-55 which is derivative of ceasing hydrothermal treatment at 20 hours or less. Tests 50-53 all possessed significantly better activity than tests of catalysts derived from sodium ferrierite crystallized over 20 hours. The reasons for the phenomena are not yet well understood, but it can be assumed that the resultant sodium ferrierite prepared by this method is a different composition of matter vis-a-vis that derived by other known technique preparations.

## Claims

1. Process for the preparation of ferrierite which comprises maintaining an aqueous starting mixture containing at least one silicon compound, at least one aluminium compound, at least one alkali metal (M) compound and at least one organic nitrogen compound (RN) selected from the group consisting of piperidine, pyridine, alkyl-substituted piperidines and -pyridines, piperazine, 4-picoline and 4-picoline-N-oxide, at an elevated temperature until crystalline ferrierite has formed, in which starting mixture the various compounds are present in the following molar ratios, the aluminium-, silicon- and alkali metal-compounds being calculated on basis of the oxides:
$SiO_2 : M_2O = 7.3$ to 15.6,
$SiO_2 : Al_2O_3 = 15.6$ to 35.7,
$H_2O : SiO_2 = 5$ to 500, and
$RN : SiO_2 = 0.05$ to 1.0.

2. Process according to claim 1 wherein crystalline sodium ferrierite is prepared by employing a sodium compound as alkali metal compound in the starting mixture, separating crystalline product from the mother liquor and calcining the product thus obtained.

3. Process according to claim 1 or 2 wherein the starting mixture is maintained at a temperature from 100°C to 400°C and a pressure from 1 to 100 bar abs. for a period of at least 10 hours.

4. Process according to any one of the preceding claims wherein the starting mixture contains as alkali metal compound sodium silicate, as aluminium compound aluminium sulphate and as silicon compound silica gel and/or sodium silicate.

5. Process according to any one of the preceding claims wherein the starting mixture contains (alkyl) piperidine as organic nitrogen compound.

6. Process according to any one of the preceding claims wherein the molar ratio of $SiO_2/Al_2O_3/MgO$ is equal to 25 $SiO_2$/(0.9 to 1.1)$Al_2O_3$/(2.3 to 2.7)$MgO$.

7. Process according to any one of the preceding claims wherein alkali metal ions present in the crystalline ferrierite product are replaced by hydrogen ions by means of an ion exchange treatment.

8. Process according to any one of the preceding claims wherein at least one metal selected from the group consisting of the metals from Group 6b, 7b and 8 of the Periodic Table of the Elements is incorporated into the ferrierite product.

9. Process for the catalytic dewaxing of hydrocarbon oils wherein the catalyst employed is based on ferrierite prepared according to a process as claimed in any one of claims 1–8.

## Patentansprüche

1. Ein Verfahren zur Herstellung von Ferrierit, welches das Halten eines wäßrigen Ausgangsgemisches, enthaltend mindestens eine Siliziumverbindung, mindestens eine Aluminiumverbindung, mindestens eine Alkalimetall(M)verbindung und mindestens eine organische Stickstoffverbindung (RN), ausgewählt aus der Gruppe bestehend aus Piperidin, Pyridin, Alkyl-substituierten Piperidinen und Pyridinen, Piperazin, 4-Picolin und 4-Picolin-N-oxid, bei einer erhöhten Temperatur, bis sich kristalliner Ferrierit gebildet hat, in welchem Ausgangsgemisch die verschiedenen Verbindungen in den folgenden molaren Verhältnissen vorliegen, wobei die Aluminium-, Silizium- und Alkalimetallverbindungen auf Basis der Oxide berechnet sind:
$SiO_2 : MgO$ = 7,3 bis 15,6,
$SiO_2 : Al_2O_3$ = 15,6 bis 35,7,
$H_2O : SiO_2$ = 5 bis 500, und
$RN : SiO_2$ = 0,05 bis 1,0,
umfaßt.

2. Verfahren nach Anspruch 1, worin kristalliner Natriumferrierit durch Anwendung einer Natriumverbindung als Alkalimetallverbindung im Ausgangsgemisch, Abtrennen des kristallinen Produkts von der Mutterlauge und Calcinieren des so erhaltenen Produktes hergestellt wird.

3. Verfahren nach Anspruch 1 oder 2, worin das Ausgangsgemisch während einer Dauer von mindestens 10 Stunden bei einer Temperatur von 100°C bis 400°C und einem Druck von 1 bis 100 bar abs. gehalten wird.

4. Verfahren nach einem der vorstehenden Ansprüche, worin das Ausgangsgemisch als Alkalimetallverbindung Natriumsilikat, als Aluminiumverbindung Aluminiumsulfat und als Siliziumverbindung Silicagel und/oder Natriumsilikat enthält.

5. Verfahren nach einem der vorstehenden Ansprüche, worin das Ausgangsgemisch (Alkyl)Piperidin als organische Stickstoffverbindung enthält.

6. Verfahren nach einem der vorstehenden Ansprüche, worin das Molverhältnis von $SiO_2/Al_2O_3/MgO$ gleich 25 $SiO_2$/(0,9 bis 1,1)$Al_2O_3$/(2,3 bis 2,7)$MgO$ ist.

7. Verfahren nach einem der vorstehenden Ansprüche, worin die im kristallinen Ferrieritprodukt vorliegenden Alkalimetallionen mittels einer Ionenaustauschbehandlung durch Wasserstoffionen ersetzt werden.

8. Verfahren nach einem der vorstehenden Ansprüche, worin mindestens ein Metall, ausgewählt von der Gruppe bestehend aus den Metallen der Gruppen 6b, 7b und 8 des Periodensystems der Elemente, im Ferrieritprodukt inkorporiert wird.

9. Verfahren zum katalytischen Entwachsen von Kohlenwasserstoffölen, worin der angewandte Katalysator auf einem gemäß einem Verfahren nach einem der Ansprüche 1 bis 8 hergestellten Ferrierit basiert.

## Revendications

1. Procédé de préparation de ferriérite dans lequel on maintient un mélange de départ aqueux comprenant au moins un composé de silicium, au moins un composé d'aluminium, au moins un composé de métal alcalin (M) et au moins un composé d'azote organique (RN) choisi dans le groupe constitué par la pipéridine, la pyridine, les pipéridines et pyridines alcoyl-substituées la pipérazine, la 4-picoline et le 4-picoline-N-oxyde, à température élevée jusqu'à formation de ferriérite cristalline, dans lequel mélange de départ les divers composés sont présents dans les rapports molaires suivants, les composés d'aluminium, de silicium et de métal alcalin étant calculés sur la base des oxydes:
$SiO_2 : MgO$ = 7,3 à 15,6,
$SiO_2 : Al_2O_3$ = 15,6 à 35,7,
$H_2O : SiO_2$ = 5 à 500, et
$RN : SiO_2$ = 0,05 à 1,0.

2. Procédé selon la revendication 1, dans lequel on prépare la ferriérite sodique cristalline en employant un composé de sodium sous forme de composé de métal alcalin dans le produit de départ, en séparant le produit cristallin de la liqueur-mère et en calcinant le produit ainsi obtenu.

3. Procédé selon la revendication 1 ou 2, dans lequel on maintient le mélange de départ à une température de 100°C à 400°C et à une pression allant de 1 à 100 bars abs. pendant une durée d'au moins 10 heures.

4. Procédé selon l'une quelconque des revendications précédentes dans lequel le mélange de départ contient comme composé de métal alcalin le silicate de sodium, comme composé d'aluminium le sulfate d'aluminium et comme composé de silicium du gel de silice et/ou le silicate de sodium.

5. Procédé selon l'une quelconque des revendications précédentes dans lequel le mélange de départ contient une (alcoyl)pipéridine comme composé d'azote organique.

6. Procédé selon l'une quelconque des revendications précédentes dans lequel le rapport molaire de $SiO_2/Al_2O_3/M_2O$ et égal à 25 $SiO_2/(0,9$ à $1,1)$ $Al_2O_3/(2,3$ à $27)M_2O$.

7. Procédé selon l'une quelconque des revendications précédentes dans lequel les ions de métaux alcalins présents dans le produit de ferriérite cristallin sont remplacés par des ions hydrogène au moyen d'un traitement d'échange d'ions.

8. Procédé selon l'une quelconque des revendications précédentes dans lequel au moins un métal choisi dans le groupe constitué par les métaux du groupe 6b, 7b et 8 de la Classification Périodique des éléments est incorporé dans le produit de ferriérite.

9. Procédé de décirage catalytique des huiles hydrocarbonées dans lequel le catalyseur employé est à base de ferriérite préparée selon un procédé tel que revendiqué dans l'une quelconque des revendications 1–8.

FIG.1

EP 0 236 590 B1

FIG.2

$\dfrac{\text{MOLES Na}_2\text{O}}{25.0\,\text{MOLES SiO}_2}$

FIG.3

MOLES $\text{Al}_2\text{O}_3$ / 25 MOLES $\text{SiO}_2$

# FIG.4

# FIG.5